# EUROPEAN PATENT APPLICATION

(11) **EP 1 672 486 A1**
(43) Date of publication of application: **21.06.2006**
(21) Application number: 04029661.8
(22) Date of filing: 15.12.2004
(51) Int. Cl.: G06F 9/445, G06F 9/44

(54) **Method and device for permitting secure use of program modules**

(71) Applicant: Sony Ericsson Mobile Communications AB, 221 88 Lund (SE)
(72) Inventor: Kristensson, Andreas, 222 24 Lund (SE); Landqvist, Magnus, 222 21 Lund (SE)
(74) Representative: Asketorp, Göran

(57) **Abstract**

Method and an electronic device for permitting use of program modules for an application program. The method comprises acquiring data content including at least one program module and identifying means associated with the program module. The electronic device includes identifying data for identifying a plurality of program interface modules. The method further comprises determining whether the identifying means is at least partly associated with the identifying data.

## Description

### Technical Field of the Invention

The present invention relates to a method and an electronic device for permitting use of at least one program module for an application program.

### Description of Related Art

Software for an electronic device may be divided into systems software and applications software. Systems software may interact with the hardware of the device. Often systems software is implemented at a basic level. Systems software comprises, e.g. operating systems, compilers, and utilities for managing computer resources. Applications software, or application programs, may e.g. comprise database programs, word processors, spreadsheets, games, telephone books, or calendars. An application program may run on top of a systems software because it is normally unable to run without e.g. an operating system and system utilities.

Many portable electronic devices, such as a portable radio communication equipment, a mobile radio terminal, a mobile telephone, a pager, a communicator, an electronic organizer, a personal digital assistant (PDA) or a smartphone, use systems software or platforms as an interface between the hardware and application programs. One such platform is MIDP (Mobile Information Device Profile). MIDP provides core application functionality required by the portable electronic device as a standardized Java® runtime environment and a set of Java® APIs (Application Program Interface). The APIs are definitions of the ways in which an application program may communicate with the systems software.

When a user of the portable electronic device wants to run an application, he may browse a list of applications. Once an application is selected, the portable electronic device makes sure that it is permitted to run the application or the APIs that the application program intends to use. The application program may be stored in the portable electronic device or be downloaded on request.

The MIDP specification defines how applications are discovered, installed, updated and removed on the portable electronic device. In the permission scheme for permitting APIs to be run by the electronic device as defined by MIDP version 2.0, an application program is assigned to a predefined trusted security domain, which has a static security policy for permitting use of certain protected APIs. These permission schemes only apply to the protected program modules, which are defined by the MIDP 2.0 specification. To gain privileged access to these protected APIs, an application must be signed in at the trusted security domain that is defined on the portable electronic device, and be properly signed using a PKI (Public Key Infrastructure) security standard to be trusted. A trusted (PKI signed) application must declare, at installation time, what protected APIs it is going to use when executed. It can only declare that it will use protected APIs that are defined in the static security policy; otherwise the application should not be installed.

The Java® programming language, which is used together with MIDP, may also be used for providing proprietary applications, which are developed under responsibility of the manufacturer of the electronic device. Such applications may e.g. comprise a phonebook, a file manager, a calendar, an organizer, etc., that are specific for each manufacturer or a certain type of portable electronic device. When developing the proprietary applications, it might be necessary or desired to define use of proprietary APIs, which are not defined in the trusted security domains of the systems software at the time of development. However, it may also be desired that the proprietary APIs are security protected. As mentioned above, MIDP only provides security for APIs that are defined in the trusted security domains. As permission to use a certain API is granted when the application is installed, there must be a security policy present on the portable electronic device during installation. Thus, it is quite cumbersome to employ proprietary APIs, which are not trusted but which it is desired to provide security for, as they have to be specified by the MIDP specification to gain privilege to the security scheme. Adding an unspecified API would effect the MIDP specification. Furthermore, it is difficult to modify security policies on phones already on the market. Updating the APIs is equally difficult once a program module has been given privilege to the security standard.

The existing MIDP permissions framework is also suitable for untrusted applications, like games and simple applications. However, it does not function nor scale well when it comes to applying fine-grained access control to platform functionality exposed via APIs.

### Summary of the Invention

It is an object of the invention to increase the flexibility of an electronic device using an application program.

The object is achieved according to a first aspect by a method for permitting use of program modules for an application program. The method comprises acquiring data content including at least one program module and identifying means associated with the program module. The electronic device includes identifying data for identifying a plurality of program interface modules. The method further comprises determining whether the identifying means is at least partly associated with the identifying data.

The acquired program module may be installed or executed if the identifying means is at least partly associated with the identifying data.

It may be determined whether at least one identifier of the identifying means corresponds to any identifier of the identifying data.

The identifying means may include at least one identifier, which uniquely identifies a specific program module of the data content, which specific program module is a program interface module. Alternatively or additionally, the identifying means includes at least one identifier, which uniquely identifies at least one program interface module to be used together with the program module being an application program module.

The identifying means may be a list of unique identifiers. Each unique identifier may be associated with a specific program module of the acquired data content, and the identifying data may include at least one unique identifier for identifying a program interface module. The step of determining may comprise determining whether any unique identifier of the identifying means corresponds to any unique identifier of the identifying data.

The identifying means may be a single identifier, the value of which is dependent on an identifier for each acquired program module. The identifying data may include a plurality of values, which each is dependent on identifiers for a plurality of program interface modules. The step of determining may comprise determining whether the single identifier corresponds to any value of the identifying data.

According to a second aspect, the object is achieved by an electronic device for permitting use of program modules for an application program. The electronic device comprises a controller for acquiring data content including at least one program module and identifying means associated with the program module. The electronic device includes identifying data for identifying a plurality of program interface modules. The controller is configured to determining whether the identifying means is at least partly associated with the identifying data.

The controller may be configured to install or execute the acquired program module if the identifying means is at least partly associated with the identifying data. Furthermore, the controller may be configured to determine whether at least one identifier of the identifying means corresponds to any identifier of the identifying data.

The identifying means may include at least one identifier, which uniquely identifies a specific program module of the data content, which program module is a program interface module. Alternatively or additionally, the identifying means may include at least one identifier, which uniquely identifies at least one program interface module to be used together with the program module being an application program module.

The identifying means may be a list of unique identifiers, each unique identifier being associated with a specific program module of the acquired data content. The identifying data may include at least one unique identifier for identifying a program interface module. The controller may be configured to determine whether any unique identifier of the identifying means corresponds to any unique identifier of the identifying data.

The identifying means may be a single identifier, the value of which is dependent on an identifier for each acquired program module. The identifying data may include a plurality of values, which each is dependent on identifiers for a plurality of program interface modules. The controller may be configured to determine whether the single identifier corresponds to any value of the identifying data.

The electronic device may be a computer, a portable radio communication equipment, a mobile radio terminal, a pager, a communicator, an electronic organizer, a personal digital assistant (PDA), a handheld device a smartphone or a mobile telephone.

According to a third aspect, the data content may be generated according to a method for generating data content including a at least one program module for an application program. The method comprises incorporating the program module into the data content, and incorporating into the data content identifying means associated with the incorporated program module.

Furthermore, at least one unique identifier associated with each program module to incorporate into the data content may be acquired. Then, each unique identifier may be incorporated into the data content. Alternatively or additionally, a single identifying means may be generated based on the unique identifiers associated with a plurality of program modules being incorporated into the data content. Then, the single identifying means may be incorporated into the data content.

According to a fourth aspect, an apparatus for generating data content may generate the data content comprising at least one program module for an application program. The apparatus comprises a controller for incorporating the program module into the data content. The controller is configured to incorporate into the data content identifying means associated with the incorporated program module.

The controller may be configured to acquire at least one unique identifier associated with each program module to incorporate into the data content. Furthermore, the controller may be configured to incorporate each unique identifier into the data content. Alternatively or additionally, the controller may be configured to generate a single identifying means based on the unique identifiers associated with a plurality of program modules being incorporated into the data content, and incorporate the single identifying means into the data content.

According to a fifth aspect, a computer program product comprising computer program code means may execute the method for permitting use of program modules for an application program when said computer program code means is run by an electronic device having computer capabilities.

According to sixth aspect, a computer program product comprising computer program code means may execute the method for generating the data content when said computer program code means is run by an electronic device having computer capabilities.

According to a seventh aspect, the data content may comprise at least one program module and identifying means associated with the program module.

The identifying means may be at least one unique identifier for identifying each program module. Alternatively or additionally, the identifying means may be a plurality of unique identifiers, wherein each unique identifier may be associated with a specific program module included in the data content. The data content may be a JAR file.

Further embodiments of the invention are defined in the dependent claims.

It is an advantage of the invention that the need for a centralized security policy is eliminated and that approval of acquired program modules may occur at the time of deployment of the program modules, as the program modules may be installed without declaring that it will use only trusted program interface modules. Furthermore, it is an advantage that proprietary program modules may be used with a security policy without affecting the specification of the platform on which they are implemented.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features, and advantages of the invention will appear from the following description of several embodiments of the invention, wherein various aspects of the embodiments will be described in more detail with reference to the accompanying drawings, in which:
Fig. 1 is a schematic view of an electronic device connected to servers;
Fig. 2 is a block diagram of the electronic device of Fig. 1;
Fig. 3 is a block diagram of an arrangement for generating program modules and associated identifying means;
Fig. 4 is a flow-chart of a method for generating data content comprising program modules and associated identifying means; and
Fig. 5 is a flow-chart of a method for downloading and permitting access to program modules having associated identifying means.

### Detailed Description of Embodiments

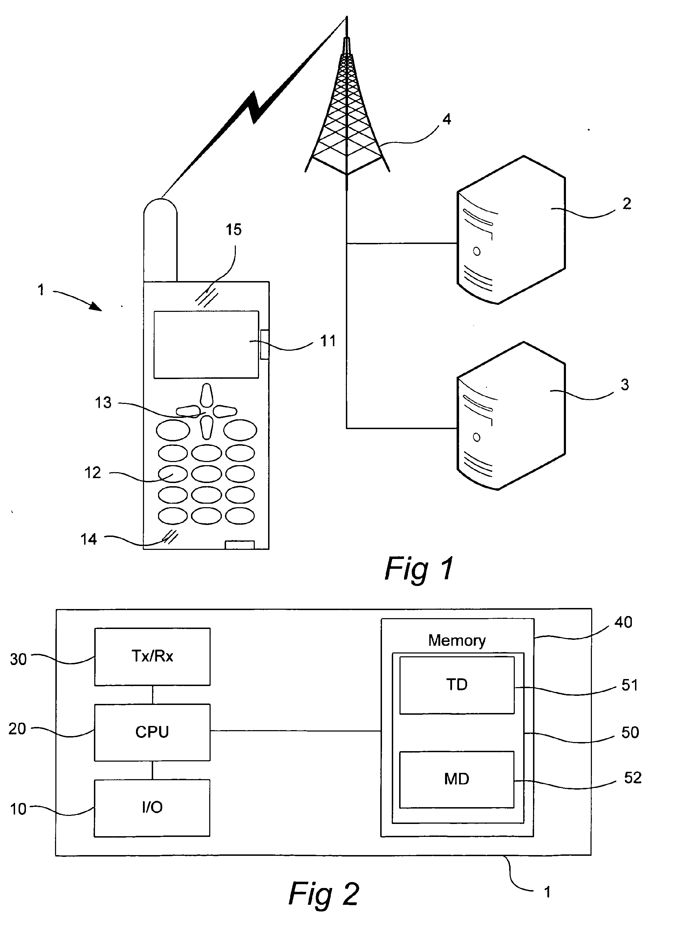

Fig. 1 illustrates an electronic device 1 connected to a first and a second server 2, 3 through a base station 4 of a wireless communication network. In this embodiment, the electronic device 1 is a mobile telephone. In other embodiments, the electronic device is a computer, a portable radio communication equipment, a mobile radio terminal, a mobile telephone, a pager, a communicator, an electronic organizer, a personal digital assistant (PDA), a smartphone, a handheld device or any other electronic device arranged to download program modules for application programs as will be described below. Furthermore, in other embodiments, the electronic device 1 is connected to the first and the second server 2, 3 through a wire line based network, such as a wide area network (WAN), a local area network (LAN), or a public switched telecommunication network (PSTN). The program modules may be downloaded or accessed in various ways. The program modules may be preloaded, but need not be installed, into the electronic device 1 during manufacturing. Alternatively, the program modules are downloaded or accessed from an external or internal electronic device, such as a server, a personal computer, an accessory device, another portable communication device, a memory card introduced into a card reader etc. The electronic device 1 may be connected to the external/internal device e.g. by means of a cable, or a wireless connection, such a short-range radio link or an IR (Infra Red) link.

The electronic device 1 comprises an input/output interface 10 (Fig. 2), through which a user may interact with the electronic device 1. The input/output interface 10 may e.g. comprise a display 11, a keypad 12, a joystick 13, a microphone 14, and a loudspeaker 15.

Data content may be downloaded, e.g. from the servers 2, 3, to the electronic device 1. The data content may comprise one or several program modules, and identifying means for identifying each program module, for applications to be run in the electronic device 1. Alternatively, the identifying means identify a program interface module, such as an application program interface (API), which the program module intends to use when an application is run. The program module may be an executable software program, such as an application program module for a game, a telephone book, a file browser etc. In that case, the identifying means identify application interface module(s) that the content of the application program module intends to use for communicating with the systems software. Alternatively, the program module is an application interface module, such as an API. In that case, each identifying means identify a specific program interface module, which is incorporated into the data content. Furthermore, the program module may be any piece of program instructions that are executable and may need program support to be executed, such as a Java® engine.

After downloading or accessing a program module, it may be determined whether the electronic device 1 comprises identifying data, which is at least partly associated with the identifying means of the data content. If so, the program modules may be used in the electronic device 1. The stored identifying data may e.g. identify program interface modules, which the electronic device 1 is permitted to use. If the program module of the data content is an application program module, it may be decided whether the program interface modules that the application program module intends to use are defined or identified in the electronic device 1. If the program module is a program interface module, it may be determined whether that program interface module may be used in the electronic device 1.

Fig. 2 illustrates various components of the electronic device 1. Such components are the input/output interface 10, a controller 20, e.g. implemented by a central processing unit (CPU), a transmitter/receiver (Tx/Rx) unit 30, and a memory 40.

The Tx/Rx unit 30 may be configured to wirelessly communicate with the base station 4, e.g. according to a telecommunication standard such as GSM (Global System for Mobile communication), PDC (Personal Digital Cellular), 3GPP (3^{rd} Generation Partnership Project), or a CDMA2000 (Code Division Multiple Access) network. In other embodiments, the Tx/Rx unit 30 comprises a modem, or a network card for accessing an information network, such as the Internet. In still other embodiments, the Tx/Rx unit 30 comprises a short-range transceiver, such as an radio or IR transceiver. The Tx/Rx unit 30 may also comprise an accessory connector for connection to a cable.

The memory 40 may comprise various types of memories, such as a non-volatile memory, a volatile memory, a ROM (Read Only Memory), a RAM (Random Access Memory), a flash memory, a memory card, etc., which are jointly illustrated by memory 40.

The user may select or initiate various applications or application programs presented on the display 11, e.g. as selectable icons or menus in a list. The applications may e.g. comprise a telephone book, a file manager, games, a file browser, a camera application, an internet browser and/or a screen saver. The applications may be implemented with an object oriented programming language, such as Java®. Each application may be implemented by means of an application program module, which may be stored in the memory 40 or be downloaded, or accessed from another device, when the application is initiated. The application program module may use program interface modules or components, such as Java® APIs or components, to communicate with a systems software.

The electronic device 1 also comprises a platform or systems software 50, such as MIDP® or Symbian® OS or any other platform that uses cryptographically signed program modules, which may be acquired by downloading or be preinstalled. The systems software 50 is included in the memory 40. The application programs are run in or by the systems software 50. To have a centralized security policy attached to an application, it may need to be signed in at a certain trusted security domain of the systems software 50. A first domain 51 is a trusted domain (TD), wherein applications only utilizing trusted application program modules, such as trusted APIs, are signed in. When an applications signed in at the TD 51 is installed, it is checked whether the systems software 50 permits use of each of the program interface modules which the application indicates that it intents to use. If so, the application program may be granted access to the program interface modules, which are present in the memory or may be downloaded from the servers 2, 3, if necessary.

To acquire the application program modules, application content information may be acquired from the first server 2. The application content information may comprise a description of the data content to be acquired, the manufacturer of the data content, the size of the data content, an encrypted signature, certificates, and a storage address of the data content to be acquired. The application content information may e.g. be a Java® JAD (Java Application Descriptor) file, which the Java® application manager in the electronic device 1 may interpret. An encrypted signature and certificates are used to verify that the application is provided by a trusted source. The certificates may be based on a PKI (Public Key Infrastructure). Corresponding keys or certificates are stored in the electronic device 1.

When approval of downloading of the data content comprising the application program modules has been granted, the electronic device may download the application program modules from the storage address provided in the content information. The storage location pointed out by the storage address may e.g. be the second server 3, or a storage location within the electronic device 1. However, the application content information and the data content comprising the application program modules may be provided at the same storage location, such as either of server 2 or 3. The data content may e.g. by a Java® JAR (Java Application Archive) file. When the data content has been downloaded, the application may run the application program modules directly, as they are already approved when signed in at the TD 51. The procedure of applications signed in at the TD 51 is based on procedures known by a skilled person. The applications signed in at the TD 51 are e.g. games, a telephone book, a file browser, an Internet browser, a camera application etc.

According to another embodiment, the application content information and the data content may be packed together, e.g. supplied in a single file, such as a ZIP file. The application content information and the data content may then be transferred to the electronic device in any suitable way, such as by downloading or pre-storage during manufacturing of the electronic device 1.

When the file comprising the application content information has been acquired, certificates and chains of certificates may be verified. However, a signature of the file including the data content may not be verified until that file has been acquired. The signature of the file including the data content may be provided in the file including the application content information. To verify the signature, the file including the data content need to be acquired, such as downloaded. Then a checksum or hash may be determined based on the content of the acquired file. The checksum may then be verified by comparing it to the signature provided in the file including the application content information, e.g. by means of a cryptographic operation. Thus, both the file including the application content information and the file including the data content may need to be acquired before the application may be signed in at a certain security domain, or before it may be determined whether the file including the data content has been modified after it was signed and the signature was included in the file including the application content information.

According to one embodiment, the electronic device 1 comprises at least a second security domain - a manufacturer domain (MD) 52. The security level of the MD 52 may be set by the manufacturer. Thus, proprietary applications that are specific for the manufacturer and/or the type/version of electronic device 1 may be signed in at the MD 52. The program modules, such as application program modules and program interface modules, of the applications signed in at the MD 52 need not be trusted and specified by the systems software 50. However, a security policy may still be applied as will be described below.

The electronic device 1 may comprise an arbitrary number of security domains. Thus, the electronic device 1 may comprise one or several trusted domains, and one or several manufacturer domains. The supplier of a certain security certificate specifies the security domain to use for a certain application. Thus, different program interface modules may be used in different security domains. A certain application program may thus be run in a first security domain, but not in another, depending on the permission scheme to use various program interface modules.

First, one embodiment for generating program modules for the applications to be signed in at the MD 52 will be described.

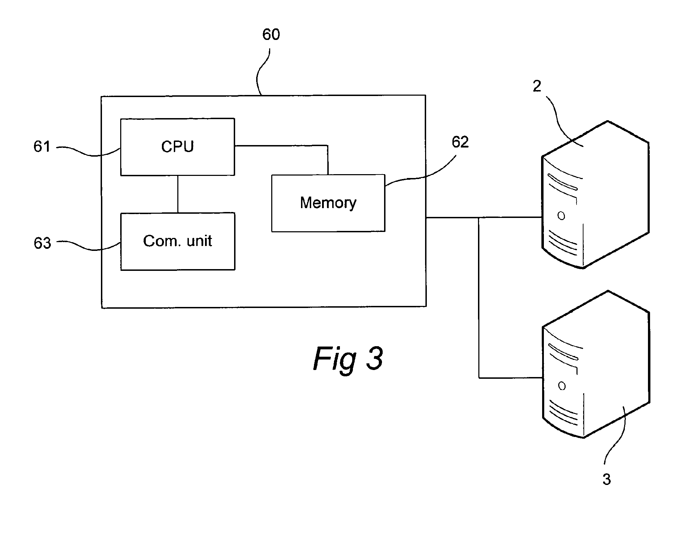

Fig. 3 illustrates an arrangement for generating program modules, which may be uniquely identified. The arrangement may comprise an electronic apparatus 60, such as a computer, having a controller 61, such as a CPU 61, a memory 62 and a communication unit 63. By means of the electronic apparatus 60, data content comprising program modules and associated identifying means may be generated and stored at the second server 3. Also, content information may be generated and stored at the first server 2, comprising information as described above. Each program module may comprise an application program modules and/or a program interface module. The associated identifying means may comprise one or several unique identifiers for identifying one or several program interface modules that the application program intends to use. Alternatively, the identifying means identifies one or several program interface modules that are included in the data content.

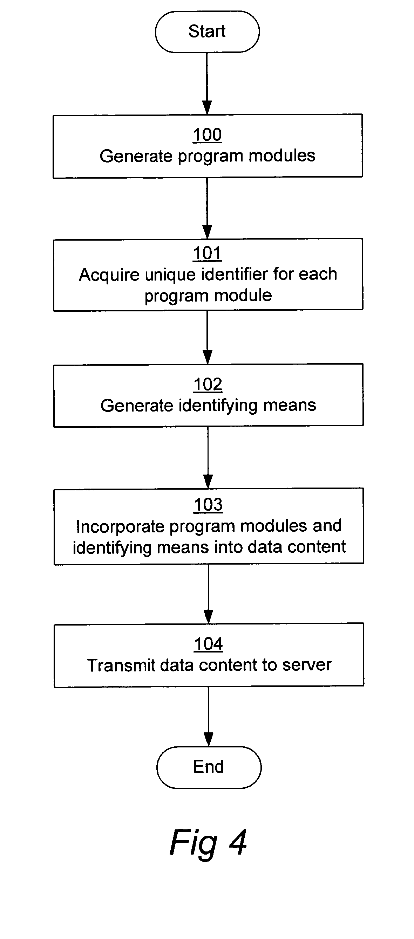

Fig. 4 illustrates one embodiment of a method for generating the data content comprising program modules and identifying means. In step 100, the program modules are generated or acquired. They may e.g. be downloaded from a server or stored in memory 62. In step 101, the unique identifier associated with each program module is acquired. Alternatively, one unique identifier may be assigned to a group of program modules, which then identifies each program module within the group. Each unique identifier may e.g. be provided by a UUID (Universal Unique Identifier), or a GUID (Globally Unique Identifier), which each is a 128-bit number that may be assigned to any object and that is guaranteed to be unique. Any globally unique identifier may provide the unique identifier. The unique identifiers may have been assigned when the program modules were generated. In step 102, an identifying means for identifying the program module is generated. If a unique identifier is assigned to each program module, the identifying means may be a list of the unique identifiers of each program module, which may be included as a file, e.g. a ZIP file, into the data content. The list may be an ACL (Access Control List). The unique identifier may identify a program interface module that the content of the program module intends to use. Alternatively, the unique identifier identifies the program module per se.

In one embodiment, the data content comprises a single unique identifier, wherein the identifying means is the single identifier, possibly signed using a PKI key. If each possible group of program modules has its own single unique identifier, the program modules included in that group would be known once the identifier is known.

The identifying means may also be an identifier that is associated with one or several unique identifiers. A check sum or encrypted value may e.g. be generated based on the or each unique identifier. Thus, the security may be even further increased.

The identifying means of the data content may be signed using a PKI key. If the identifying means is signed, a corresponding key is stored in the electronic device, which should use the program modules associated with the identifying means. Thus, each electronic device having the public key may use the data content associated with the identifying means signed by the PKI key. Thus, a manufacturer may determine which types of electronic devices, or version of a certain type of electronic device, may use the data content by incorporating the public key into a certain electronic device. This is an advantage, as program modules may be dedicated to a specific type or version of an electronic device. This may be useful when the method according to the invention is used for updating application programs stored in the electronic device 1.

When program modules for a specific application and their associated identifying means have been generated, they are incorporated into the data content in step 103. If the data content is a Java® JAR file, the identifying means may be provided as a separate file in the JAR file. Finally, the data content is transmitted to the server 3, where it may be stored. Also, application content information, such as a Java® JAD file may be generated and stored at server 2.

Finally, in step 104, the data content is transmitted to the server and the procedure ends.

The electronic device 1 comprises identifying data, for identifying program modules. The identifying data may identify program modules that the electronic device 1 is permitted to access or use, such as certain program interface modules. The identifying data may alternatively or additionally identify program modules that are stored in the electronic device 1, such as a certain application program module or program interface module. The identifying data may be approved and secured against manipulation by means of a cryptographic signature. The signer of the identifying data decides in which security domain the identifying data should be provided, thus setting the required security level, such as in MD 52. Identifying data for identifying a plurality of program modules, which the electronic device is permitted to use, may be stored in the electronic device 1, e.g. in memory 40. Thus, the electronic device 1 comprises means for identifying each program module that it is permitted to use or access.

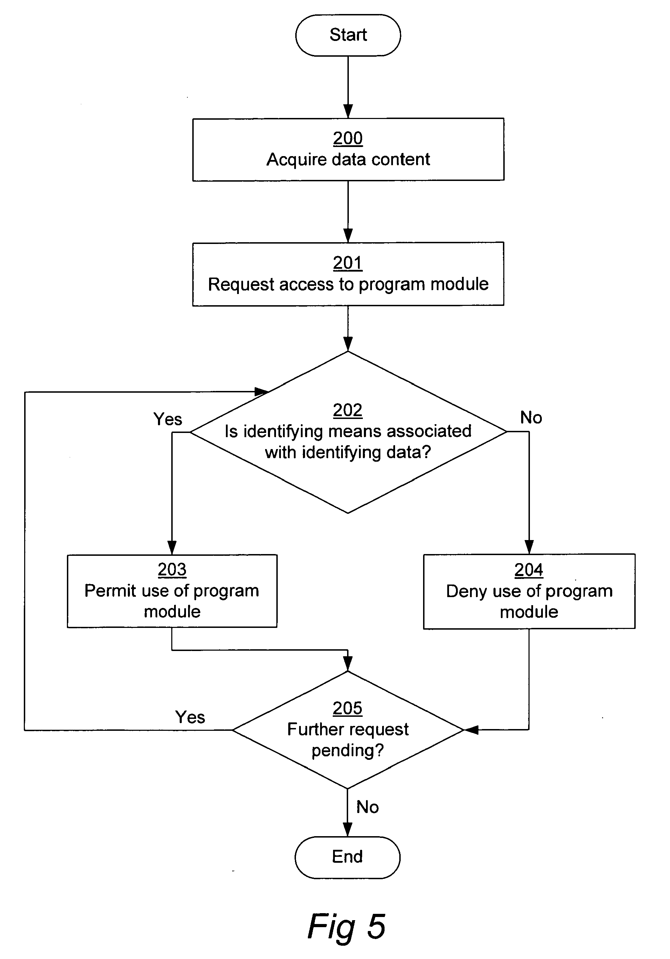

Fig. 5 illustrates one embodiment of a method for permitting use of acquired program modules, which may have been downloaded or otherwise accessed and which are signed in at the MD 52. Data content comprising program modules may e.g. have been downloaded in response to a request to update program modules stored in memory 40. Alternatively, the program modules have to be downloaded each time the application, to which they are associated, is initiated, and are thus downloaded in response to initiation of the application. The application may be initiated e.g. by the user or alternatively by the systems software 50 without the involvement of the user. The downloading may also be initiated in response to a request from an operator or manufacturer of the electronic device 1, transmitting the request via the network to which the electronic device 5 is connected.

In the method according to Fig. 5, it is assumed that any initiation process, such as described above with regard to downloading and verifying the application content information, has already been performed. The initiation process is not necessary in every embodiment; the data content could be downloaded without any initiation process.

In a first step 200, the data content is acquired, such as downloaded from the second server 3 to the electronic device 1 if not already present in memory 40. Then, in step 201 access to one of the program modules is requested, or the program module is installed or executed.

In step 202, it is determined whether the identifying means of the downloaded data content is at least partly associated with identifying data stored in the electronic device 1. The association may be determined based on identifying means of the acquired data content and the identifying data stored in the electronic device 1.

Step 202 may be carried out to determine whether the electronic device 1 permits access to the requested program module per se, or whether one or several program interface modules defined by the program module, which may be an application program module, may access the associated program interface modules. The request may be initiated by the application program. Alternatively, a determination whether the electronic device 1 is permitted to use each of the downloaded program modules, or program interface modules defined by the identifying means, is automatically performed in response to a successful downloading of the data content. If the answer in step 202 is yes, the procedure proceeds to step 203, wherein the application is permitted to execute or install the program module(-s) associated with the identifying means. Then, the procedure proceeds to step 205. If the answer in step 202 is no, the procedure proceeds to step 204. In step 204, the application is denied permission to use/install/execute the requested program module. Then, the procedure proceeds to step 205.

In step 205 it is determined whether any request to access a downloaded program module is pending. If the answer in step 205 is yes, the procedure returns to step 202. If the answer in step 205 is no, the procedure ends.

By employing the method according to Fig. 5, a security policy set up by the manufacturer of the electronic device 1 is provided. Various versions of a specific electronic device may have different permission schemes. Furthermore, the need for a centralized security policy is eliminated. Thus, the manufacturer can develop and permit use of new proprietary program modules at any time without involvement of the systems software 50.

The determination whether the identifying means is associated with the stored identifying data may be provided when the program module of the data content is installed or, if it is an application program module, when the program module is executed. If it is determined in step 202 that the identifying means is not associated with, or is only partly associated with, the identifying data the following steps may be taken:
- execution or installation of a certain or all program modules is denied. If a certain unique identifier of an identifying means has no associated unique identifier of the identifying data, execution or installation of the certain program module may be denied;
- if the program module is an application program module and the identifying means identifies one or several program interface modules, but the identifying data does not comprise one or several identifiers for an associated program interface module, which may be used, the missing program interface module may be acquired before installation or execution of the application program module proceeds. The missing program interface module may be acquired an approved as discussed above. Separate identifying data may comprise identifiers for program interface modules that may be acquired;
- installation or execution of the program module may proceed even though the identifying means and the identifying data are not fully associated. An application program module may function without a certain program interface module, which it intends to use but which is not identified by the identifying data.

If the applications are implemented in Java®, flexible and fine-grained access control to Java® APIs may be provided. Also, if the systems software 50 is MIDP 2.0, there is no need to modify the existing Java® security framework of MIDP as the method according to the invention and the MIDP security scheme complement each other. The method according to the invention is totally MIDP 2.0 compliant and will not be affected by further additions to the MIDP 2.0 standard. The method may also be used for downloading and permitting access to program modules other than Java® APIs, such as COM (Component Object Model) components, which are also identified by unique identifiers. Thus, the method may be used controlling installation and usage of COM interfaces, e.g. through Java® APIs. The method may also be used for exposing manufacturer defined Java® APIs via IDL (Interface Description Language) as a Java® interface.

The step of determining whether the downloaded identifying means is associated with any stored identifying data may be provided by determining whether the downloaded identifying means corresponds to stored identifying data. The identifying means may correspond to the identifying data e.g. if they each is a list of unique identifiers. If each unique identifier of the identifying means corresponds or is equal to a unique identifier of the identifying means a correspondence is achieved. The identifying means may be associated with the identifying data if at least one unique identifier of the identifying means corresponds to an unique identifier of the identifying data. An exact correspondence may be required. Furthermore, if the identifying means is signed, it has to be verified using a key stored in the electronic device before being compared to any stored identifying means.

If the downloaded identifying means comprises a plurality of identifiers, which each uniquely identifies a specific program module of the acquired data content, each of the downloaded identifiers may be compared to a list of identifiers stored in the electronic device 1. The stored identifiers identify program modules, which the electronic device 1 may use, or which are already stored in the electronic device 1. This allows for an easy implementation of the identifying means. To increase the security, each unique identifier may be encrypted, wherein the downloaded identifiers need to be decrypted before being compared to the stored identifying data.

Alternatively, the downloaded identifying means is a single identifier, the value of which is dependent on each downloaded program module. Correspondingly, at least one value of the stored identifying data is dependent on a plurality of program modules; which value is a single identifier. Thus, the determination to ascertain that the electronic device 1 is permitted to use the acquired program modules may be performed by determining whether a single identifying means corresponds to any value of the stored identifying data. If so, the electronic device is permitted to use each downloaded program module associated with the single identifying means. This could be an advantage as less identifiers need to be processed.

The single identifier may be dependent on unique identifiers for each of the downloaded program modules or program interface modules that the program module intends to use, and the stored identifying data may be dependent on unique identifiers for a plurality of program modules. The single identifier may be a UUID assigned to a group of identifiers. Alternatively, the single identifier may be generated based on unique identifiers for each of the program modules it identifies. A checksum may e.g. be generated based on the plurality of unique identifiers included into the data content and provided as the single identifier. Corresponding checksums are thus provided for groups of program modules, which the electronic device 1 is permitted to use/has stored.

If a single identifier is used, all steps according to the method of Fig. 5 need not be carried out, such as step 201. Also, step 205 is not necessary if all downloaded program modules are permitted/denied to be used in a single step.

The method according to Fig. 4 may be implemented by the computer 60, e.g. by providing software code means, which may be run by controller 61. The software code means may be stored in memory 62.

The method according to Fig. 5 may be implemented by the electronic device, e.g. by providing software code means, which may be run by controller 20. The software code means may be stored in memory 40.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The invention is only limited by the appended patent claims.

## Claims

1. A method for permitting use of program modules for an application program, comprising
acquiring data content including at least one program module and identifying means associated with the program module;
whereby the electronic device includes identifying data for identifying a plurality of program interface modules; and
determining whether the identifying means is at least partly associated with the identifying data.

2. The method according to claim 1, comprising
installing or executing the acquired program module if the identifying means is at least partly associated with the identifying data.

3. The method according to claim 1 or 2, wherein the step of determining comprises determining whether at least one identifier of the identifying means corresponds to any identifier of the identifying data.

4. The method according to any of the previous claims, wherein the identifying means includes at least one identifier, which uniquely identifies a specific program module of the data content, which specific program module is a program interface module.

5. The method according to any of claims 1 to 3, wherein the identifying means includes at least one identifier, which uniquely identifies at least one program interface module to be used together with the program module being an application program module.

6. The method according to any of the previous claims, wherein the identifying means is a list of unique identifiers, each unique identifier being associated with a specific program module of the acquired data content, and the identifying data includes at least one unique identifier for identifying a program interface module, and the step of determining comprises
determining whether any unique identifier of the identifying means corresponds to any unique identifier of the identifying data.

7. The method according to any of claims 1 to 5, wherein the identifying means is a single identifier, the value of which is dependent on an identifier for each acquired program module, and the identifying data includes a plurality of values, which each is dependent on identifiers for a plurality of program interface modules, and the step of determining comprises
determining whether the single identifier corresponds to any value of the identifying data.

8. An electronic device (1) for permitting use of program modules for an application program, comprising
a controller (20) for acquiring data content including at least one program module and identifying means associated with the program module;
whereby the electronic device (1) includes identifying data for identifying a plurality of program interface modules; and
the controller (20) is configured to determining whether the identifying means is at least partly associated with the identifying data.

9. The electronic device according to claim 8, wherein the controller (20) is configured to install or execute the acquired program module if the identifying means is at least partly associated with the identifying data.

10. The electronic device according to claim 8 or 9, wherein the controller (20) is configured to determine whether at least one identifier of the identifying means corresponds to any identifier of the identifying data.

11. The electronic device according to any of claims 8 to 10, wherein the identifying means includes at least one identifier, which uniquely identifies a specific program module of the data content, which program module is a program interface module.

12. The electronic device according to any claims 8 to 11, wherein the identifying means includes at least one identifier, which uniquely identifies at least one program interface module to be used together with the program module being an application program module.

13. The electronic device according to any of claims 8 to 12, wherein the identifying means is a list of unique identifiers, each unique identifier being associated with a specific program module of the acquired data content, and the identifying data includes at least one unique identifier for identifying a program interface module, and the controller (20) is configured to determine whether any unique identifier of the identifying means corresponds to any unique identifier of the identifying data.

14. The electronic device according to any of claims 8 to 12, wherein the identifying means is a single identifier, the value of which is dependent on an identifier for each acquired program module, and the identifying data includes a plurality of values, which each is dependent on identifiers for a plurality of program interface modules, and the controller (20) is configured to determine whether the single identifier corresponds to any value of the identifying data.

15. The electronic device according to any of claims 9 to 16, wherein the electronic device is a computer, a portable radio communication equipment, a mobile radio terminal, a pager, a communicator, an electronic organizer, a personal digital assistant, a handheld device or a smartphone.

16. The electronic device according to any of claims 8 to 14, wherein the electronic device is a mobile telephone (1).

17. A method for generating data content including a at least one program module for an application program, comprising
incorporating the program module into the data content,
**characterized by**
incorporating into the data content identifying means associated with the incorporated program module.

18. The method according to claim 17, comprising
acquiring at least one unique identifier associated with each program module to incorporate into the data content.

19. The method according to claim 18, comprising
incorporating each unique identifier into the data content.

20. The method according to claim 17, comprising
generating a single identifying means based on the unique identifiers associated with a plurality of program modules being incorporated into the data content, and
incorporating the single identifying means into the data content.

21. An apparatus (60) for generating data content comprising at least one program module for an application program, comprising
a controller (61) for incorporating the program module into the data content,
**characterized in that**
the controller (61) is configured to incorporate into the data content identifying means associated with the incorporated program module.

22. The apparatus according to claim 21, wherein the controller (61) is configured to
acquire at least one unique identifier associated with each program module to incorporate into the data content.

23. The apparatus according to claim 22, wherein the controller (61) is configured to
incorporate each unique identifier into the data content.

24. The apparatus according to claim 23, wherein the controller (61) is configured to
generate a single identifying means based on the unique identifiers associated with a plurality of program modules being incorporated into the data content, and
incorporate the single identifying means into the data content.

25. A computer program product comprising computer program code means to execute the method according to claims 1 to 7 when said computer program code means is run by an electronic device (1) having computer capabilities.

26. A computer program product comprising computer program code means to execute the method according to claims 17 to 20 when said computer program code means is run by an electronic device having computer capabilities.

27. Data content comprising at least one program module and identifying means associated with the program module.

28. The data content according to claim 27, wherein the identifying means is at least one unique identifier for identifying each program module.

29. The data content according to claim 27, wherein the identifying means is a plurality of unique identifiers, wherein each unique identifier is associated with a specific program module included in the data content.

30. The data content according to any of claims 27 to 29, wherein the data content is a JAR file.
